(19) Europäisches Patentamt
European Patent Office
Office européen des brevets

(11) **EP 4 625 538 A1**

(12) **EUROPEAN PATENT APPLICATION**
published in accordance with Art. 153(4) EPC

(43) Date of publication:
**01.10.2025 Bulletin 2025/40**

(21) Application number: **24849691.1**

(22) Date of filing: **01.08.2024**

(51) International Patent Classification (IPC):
$H01M\ 4/38^{(2006.01)}$    $H01M\ 4/48^{(2010.01)}$
$H01M\ 4/62^{(2006.01)}$    $H01M\ 4/134^{(2010.01)}$
$H01M\ 10/052^{(2010.01)}$    $H01M\ 10/0525^{(2010.01)}$
$H01M\ 4/02^{(2006.01)}$

(52) Cooperative Patent Classification (CPC):
H01M 4/02; H01M 4/134; H01M 4/38; H01M 4/48;
H01M 4/62; H01M 10/052; H01M 10/0525;
Y02E 60/10

(86) International application number:
**PCT/KR2024/095957**

(87) International publication number:
**WO 2025/029124 (06.02.2025 Gazette 2025/06)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **01.08.2023  KR 20230100220
31.07.2024  KR 20240101664**

(71) Applicant: **LG Energy Solution, Ltd.
Seoul 07335 (KR)**

(72) Inventors:
• **KIM, Nayeong
Daejeon 34122 (KR)**
• **KIM, Donghyuk
Daejeon 34122 (KR)**
• **LEE, Yong Ju
Daejeon 34122 (KR)**
• **JUN, Hyunmin
Daejeon 34122 (KR)**

(74) Representative: **Hoffmann Eitle
Patent- und Rechtsanwälte PartmbB
Arabellastraße 30
81925 München (DE)**

(54) **NEGATIVE ELECTRODE COMPOSITION, NEGATIVE ELECTRODE FOR LITHIUM SECONDARY BATTERY, COMPRISING SAME, AND LITHIUM SECONDARY BATTERY COMPRISING NEGATIVE ELECTRODE**

(57)    The present application relates to a negative electrode composition, a negative electrode for a lithium secondary battery including the same, and a lithium secondary battery including a negative electrode.

[Figure 1]

EP 4 625 538 A1

**Description**

[Technical Field]

This application claims priority to and the benefit of Korean Patent Application No. 10-2023-0100220 filed in the Korean Intellectual Property Office on August 1, 2023, the entire contents of which are incorporated herein by reference.
The present application relates to a negative electrode composition, a negative electrode for a lithium secondary battery including the same, and a lithium secondary battery including a negative electrode.

[Background Art]

Due to the rapid increase in the use of fossil fuels, the demand for the use of alternative energy or clean energy is increasing, and as part thereof, the fields that are being studied most actively are the fields of power generation and power storage using an electrochemical reaction.
At present, a secondary battery is a representative example of an electrochemical device that utilizes such electrochemical energy, and the range of use thereof tends to be gradually expanding.
Along with the technology development and increased demand for mobile devices, demand for secondary batteries as energy sources is increasing sharply. Among such secondary batteries, lithium secondary batteries having high energy density and voltage, long cycle life and low s L Self-discharging rate have been commercialized and widely used. In addition, research is being actively conducted on a method for manufacturing a high-density electrode having a higher energy density per unit volume as an electrode for such a high-capacity lithium secondary battery.
In general, a secondary battery includes a positive electrode, a negative electrode, an electrolyte, and a separator. The negative electrode includes a negative electrode active material for intercalating and deintercalating lithium ions coming out from the positive electrode, and silicon-based particles having a high discharge capacity may be used as the negative electrode active material.
In particular, according to the demand for high density energy batteries in recent years, research is being actively conducted on a method for increasing a capacity by using together a silicon-based compound such as Si/C and $SiO_x$ having a capacity 10 times or higher than that of a graphite-based material, as a negative electrode active material. However, as compared with graphite that is typically used, a silicon-based compound that is a high-capacity material has a large capacity but undergoes rapid volume expansion during charging, thereby disconnecting a conductive path to degrade battery characteristics.
Accordingly, in order to address a problem occurring when the silicon-based compound is used as the negative electrode active material, methods of suppressing the volume expansion itself such as a method of controlling a driving potential, a method of additionally further coating a thin film on an active material layer and a method of controlling a particle diameter of a silicon-based compound, or various methods for preventing a conductive path from being disconnected have been discussed. However, the above methods may rather deteriorate the performance of a battery, and thus, the application thereof is limited, so that there is still a limitation in commercializing the manufacture of a battery including a negative electrode having a high content of a silicon-based compound.
In addition, as a result of research on the aforementioned problems, it was found that in silicon-based active materials, the smaller the crystal grain size and the closer it is to a micron-sized particle size, the higher the life performance. However, when the crystal grain size of the silicon-based active material is reduced or is made to have the micron-sized particle size so as to improve the life performance, there arises a problem in that the coating condition on the electrode deteriorates, and uniform dispersion becomes relatively difficult due to particle agglomeration of the silicon-based active material.
Due to the aforementioned problems, the coating condition on the electrode deteriorates, leading to a reduction in electrode adhesion. As a result, when the cycle is repeated, a detachment phenomenon from the current collector occurs, causing a rapid decrease in life performance, or rendering it difficult to use.
Therefore, there is a need for research on a method that can address the aforementioned problems, when using a silicon-based active material as a negative electrode active material so as to improve capacity performance.

Prior Art Document

(Patent Literature 1) Japanese Patent Application Publication No. 2009-080971

[Detailed Description of the Invention]

[Technical Problem]

As a result of research on a method for improving the life performance of a negative electrode including a silicon-based active material, it was found that the aforementioned problems can be addressed by using a silicon-based active material with a particle size of several microns and a point-like conductive material with a central particle diameter in a certain ratio to the particle size of the silicon-based active material, rather than a point-like conductive material of several tens of nanometers in size used in the related art.

That is, if a point-like conductive material of several tens of nanometers in size is used as in the related art, a linear conductive material such as a carbon nanotube is used, or a combination of a linear conductive material and a planar conductive material is used, it becomes difficult to secure pores in the electrode, and the pores in the electrode are blocked due to side reactions during charging and discharging to obstruct the migration path of Li ions, which increases a resistance and leads to a deterioration in cell performance.

However, it was found that the life of the electrode is the best when the silicon-based active material has a particle size of several microns, and accordingly, it was found that when the central particle diameter of the point-like conductive material used together is adjusted, the quality of the electrode can be improved through enhanced dispersibility, and the life performance can be increased by securing a pore structure.

Accordingly, the present application relates to a negative electrode composition, a negative electrode for a lithium secondary battery including the same, and a lithium secondary battery including a negative electrode capable of addressing the above-described problems.

[Technical Solution]

An exemplary embodiment of the present specification provides a negative electrode composition including a silicon-based active material; a negative electrode conductive material; and a negative electrode binder, wherein the silicon-based active material includes one or more selected from the group consisting of Si, $SiO_x$ (0<x≤2), and a metal impurity, and includes 90 parts by weight or more of Si based on 100 parts by weight of the silicon-based active material, the negative electrode conductive material includes a point-like conductive material, and a central particle diameter of the negative electrode conductive material is 30% or greater and 60% or less relative to a central particle diameter of the silicon-based active material.

Still yet another exemplary embodiment provides a negative electrode for a lithium secondary battery including: a negative electrode current collector layer; and a negative electrode active material layer provided on one surface or both surfaces of the negative electrode current collector layer, wherein the negative electrode active material layer includes the negative electrode composition according to the present application or a cured product thereof.

Finally, there is provided a lithium secondary battery including a positive electrode; the negative electrode for a lithium secondary battery according to the present application; a separator provided between the positive electrode and the negative electrode; and an electrolyte.

[Advantageous Effects]

A negative electrode composition according to an exemplary embodiment of the present invention includes a silicon-based active material whose central particle diameter is maintained at a micro size, and at the same time, a point-like conductive material as a negative electrode conductive material in order to address the problems of uniform dispersion and a coating condition on an electrode, in which a central particle diameter of the point-like conductive material is optimized relative to a central particle diameter of the silicon-based active material.

That is, the negative electrode conductive material includes a point-like conductive material, and a central particle diameter of the negative electrode conductive material is 30% or greater and 60% or less relative to a central particle diameter of the silicon-based active material, resulting in improved electrode quality through enhanced dispersibility and increased life performance by securing a pore structure.

[Brief Description of Drawings]

FIG. 1 is a view showing a stack structure of a negative electrode for a lithium secondary battery according to an exemplary embodiment of the present application.
FIG. 2 is a view showing a stack structure of a lithium secondary battery according to an exemplary embodiment of the present application.
FIG. 3 a diagram showing a concept of circularity.

FIG. 4 is a diagram showing a lithium ion path when a point-like conductive material according to an exemplary embodiment of the present application is used.

FIG. 5 is a diagram showing a lithium ion path when a linear and/or planar conductive material is used.

<Explanation of Reference Numerals and Symbols>

10: negative electrode current collector layer
20: negative electrode active material layer
30: separator
40: positive electrode active material layer
50: positive electrode current collector layer
100: negative electrode for lithium secondary battery
200: positive electrode for lithium secondary battery
1: silicon-based active material
2: point-like conductive material
3: linear or planar conductive material
4: lithium ion path

[Best Mode]

Before describing the present invention, some terms are first defined.

When one part "includes", "comprises" or "has" one constituent element in the present specification, unless otherwise specifically described, this does not mean that another constituent element is excluded, but means that another constituent element may be further included.

In the present specification, 'p to q' means a range of 'p or more and q or less'.

In the present specification, the "specific surface area" is measured by the BET method, and specifically, is calculated from a nitrogen gas adsorption amount at a liquid nitrogen temperature (77K) by using BELSORP-mino II available from BEL Japan, Inc. That is, in the present application, the BET specific surface area may refer to the specific surface area measured by the above measurement method.

In the present specification, "Dn" refers to a particle size distribution, and refers to a particle diameter at the n% point in the cumulative distribution of the number of particles according to the particle diameter. That is, D50 is a particle diameter (average particle diameter, center particle diameter) at the 50% point in the cumulative distribution of the number of particles according to the particle diameter, D90 is a particle diameter at the 90% point in the cumulative distribution of the number of particles according to the particle diameter, and D10 is a particle diameter at the 10% point in the cumulative distribution of the number of particles according to the particle diameter. Note that the average particle diameter may be measured using a laser diffraction method. Specifically, after powder to be measured is dispersed in a dispersion medium, the resultant dispersion is introduced into a commercially available laser diffraction particle size measurement apparatus (for example, Microtrac S3500) in which a difference in a diffraction pattern according to the particle size is measured, when a laser beam passes through particles, and then a particle size distribution is calculated.

In an exemplary embodiment of the present application, the particle size or particle diameter may mean an average diameter or representative diameter of each crystal grain constituting the metal powder.

In the present specification, the description "a polymer includes a certain monomer as a monomer unit" means that the monomer participates in a polymerization reaction and is included as a repeating unit in the polymer. In the present specification, when a polymer includes a monomer, this is interpreted to be the same as when the polymer includes a monomer as a monomer unit.

In the present specification, it is understood that the term 'polymer' is used in a broad sense including a copolymer unless otherwise specified as 'a homopolymer'.

In the present specification, a weight-average molecular weight (Mw) and a number-average molecular weight (Mn) are polystyrene converted molecular weights measured by gel permeation chromatography (GPC) while employing, as a standard material, a monodispersed polystyrene polymer (standard sample) having various degrees of polymerization commercially available for measuring a molecular weight.

In the present specification, a molecular weight refers to a weight-average molecular weight unless particularly described otherwise.

Hereinafter, embodiments of the present invention will be described in detail with reference to the drawings so that one skilled in the art can readily implement the present invention. However, the present invention may be embodied in various different forms, and is not limited to the following descriptions.

An exemplary embodiment of the present specification provides a negative electrode composition including a silicon-based active material; a negative electrode conductive material; and a negative electrode binder, wherein the silicon-based active material includes one or more selected from the group consisting of Si, $SiO_x$ (0<x≤2), and a metal impurity, and includes 90 parts by weight or more of Si based on 100 parts by weight of the silicon-based active material, the negative electrode conductive material includes a point-like conductive material, and a central particle diameter of the negative electrode conductive material is 30% or greater and 60% or less relative to a central particle diameter of the silicon-based active material.

The negative electrode conductive material includes a point-like conductive material, and a central particle diameter of the negative electrode conductive material is 30% or greater and 60% or less relative to a central particle diameter of the silicon-based active material, resulting in improved electrode quality through enhanced dispersibility and increased life performance by securing a pore structure.

In an exemplary embodiment of the present application, the silicon-based active material may include one or more selected from the group consisting of Si, $SiO_x$ (0<x≤2), and a metal impurity, and may include 90 parts by weight or more of Si based on 100 parts by weight of the silicon-based active material.

In an exemplary embodiment of the present application, the silicon-based active material may include Si, and include 95 parts by weight or more of Si on the basis of 100 parts by weight of the silicon-based active material.

In another exemplary embodiment, Si may be included in an amount of 95 parts by weight or more, preferably 96 parts by weight or more, and more preferably 98 parts by weight or more, and 100 parts by weight or less, preferably 99 parts by weight or less, and more preferably 98 parts by weight or less based on 100 parts by weight of the silicon-based active material.

In an exemplary embodiment of the present application, pure silicon (Si) particles may be particularly used as the silicon-based active material.
The use of pure silicon (Si) particles as the silicon-based active material may mean that, on the basis of 100 parts by weight of the total silicon-based active material as described above, pure Si particles (Si) not bonded to other particles or elements are included within the above range.

In an exemplary embodiment of the present application, the silicon-based active material may be formed of silicon-based particles having 100 parts by weight of Si on the basis of 100 parts by weight of the silicon-based active material.

In an exemplary embodiment of the present application, the silicon-based active material may include a metal impurity, and in this case, the impurity is metal that may be generally included in the silicon-based active material, and specifically, a content thereof may be 0.1 part by weight or less on the basis of 100 parts by weight of the silicon-based active material.

Note that the central particle diameter of the silicon-based active material according to an exemplary embodiment of the present invention may be 1.5 μm or greater and 15 μm or less. In this case, the central particle diameter of the silicon-based active material may refer to the average particle diameter and may be expressed as D50.

In an exemplary embodiment of the present application, the central particle diameter of the silicon-based active material may be specifically 2 μm to 8 μm, and more specifically 3 μm to 6 μm. If the average particle diameter falls below the range, the specific surface area of the particle increases excessively, causing the viscosity of the negative electrode slurry to increase excessively. Accordingly, the particles constituting the negative electrode slurry are not smoothly dispersed. In addition, if the silicon-based active material is excessively small, a contact area between the silicon-based particles and a conductive material is reduced due to the composite composed of the conductive material and the binder in the negative electrode slurry, so that a disconnection possibility of the conductive network increases, thereby lowering the capacity retention rate. On the other hand, if the average particle diameter exceeds the range, excessively large silicon-based particles are present, resulting in an uneven surface of the negative electrode, which in turn causes a non-uniform current density during charging and discharging. Additionally, if the silicon-based particles are excessively large, the phase stability of the negative electrode slurry becomes unstable, resulting in degraded processability. As a result, the capacity retention rate of the battery decreases.

In an exemplary embodiment of the present application, the silicon-based active material generally has a characteristic BET surface area. The BET surface area of the silicon-based active material is preferably 0.1 m²/g to 150.0 m²/g, more preferably 0.1 m²/g to 100.0 m²/g, particularly preferably 0.2 m²/g to 80.0 m²/g, and most preferably 0.2 m²/g to 18.0 m²/g. The BET specific surface area is measured in accordance with DIN 66131 (using nitrogen).

In an exemplary embodiment of the present application, the silicon-based active material may be present, for example, in a crystalline or amorphous form, and is preferably not porous. The silicon-based particles are preferably spherical or fragment-shaped particles. Alternatively, but less preferably, the silicon-based particles may also have a fiber structure or be present in the form of a silicon-containing film or coating.

In an exemplary embodiment of the present application, the silicon-based active material may have a non-spherical shape and its sphericity (circularity) is, for example, 0.9 or less, for example, 0.7 to 0.9, for example 0.8 to 0.9, and for example 0.85 to 0.9.

In the present application, the circularity is determined by Formula 1-1 below, in which A is an area and P is a boundary line.

$$[\text{Formula } 1\text{-}1]$$

$$4\pi A/P^2$$

The capacity of the silicon-based active material is significantly higher than that of a graphite-based active material that is typically used, so that there have been more attempts to apply the same. However, the volume expansion rate of the silicon-based active material during charging and discharging is high, so that, for example, only a small amount thereof is mixed and used with a graphite-based active material.

Therefore, in the present invention, the particle size ratio relative to the negative electrode conductive material described below is optimized in order to address the aforementioned problems while using only a silicon-based active material as the negative electrode active material so as to improve capacity performance.

In an exemplary embodiment of the present application, there is provided the negative electrode composition in which the silicon-based active material is included in an amount of 40 parts by weight or more on the basis of 100 parts by weight of the negative electrode composition.

In another exemplary embodiment, the silicon-based active material may be included in an amount of 40 parts by weight or more, preferably 60 parts by weight or more, more preferably 65 parts by weight or more, and further preferably 70 parts by weight or more, and 95 parts by weight or less, preferably 90 parts by weight or less, and more preferably 85 parts by weight or less, on the basis of 100 parts by weight of the negative electrode composition.

The negative electrode composition according to the present application uses the negative electrode active material satisfying a specific size range, which can control the volume expansion rate during charging and discharging even when the silicon-based active material having a significantly high capacity is used within the above range, along with a negative electrode conductive material and a negative electrode binder described below. Accordingly, even when the silicon-based active material is included within the above range, the negative electrode composition does not degrade the performance of the negative electrode and exhibits excellent output characteristics during charging and discharging.

In the related art, it is general to use only graphite-based compounds as the negative electrode active material. However, in recent years, as the demand for high-capacity batteries is increasing, attempts to mix and use silicon-based active materials are increasing in order to increase capacity. However, in the case of a silicon-based active material, even when the characteristics of the silicon-based active material itself are adjusted as described above, the volume may rapidly expand during charging and discharging, thereby causing some problems of damaging the conductive path formed in the negative electrode active material layer.

In the related art, a linear or planar conductive material is mainly used for a negative electrode using a silicon-based active material. However, in the case of linear conductive materials, as the amount of conductive material increases, the tendency for the negative electrode pores to become blocked intensifies, leading to increased pore resistance and performance problems. In addition, although the planar conductive material itself can achieve surface contact, there arises a problem in that the ion migration path is damaged due to negative electrode rolling. That is, the role of the negative electrode conductive material is to create contact points among particles to enable conduction, but if it blocks the pore structure in the electrode and hinders the ion migration path in the electrolyte, the resistance increases.

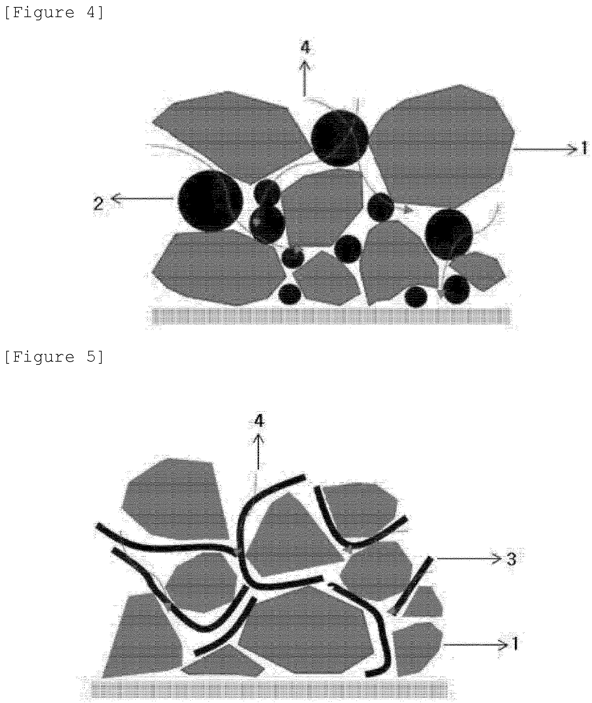

Specifically, this can be confirmed in FIG. 5. In contrast to FIG. 4, FIG. 5 shows a case where a linear and/or planar conductive material is used. In this case, it is difficult to secure pores in the electrode, and the pores in the electrode are blocked due to side reactions during charging and discharging, which hinders the lithium ion migration path, leading to increased resistance and a deterioration in cell performance.

Therefore, in an exemplary embodiment of the present application, the negative electrode conductive material may include a point-like conductive material. Using the point-like conductive material as described above facilitates securing the ion migration path and achieves better effects than using a linear or planar conductive material. Specifically, as can be confirmed in FIG. 4, by using a point-like conductive material with characteristics described below, the pores in the negative electrode become larger, thereby securing the lithium ion migration path, which leads to a reduction in resistance increase rate.

In an exemplary embodiment of the present application, there is provided the negative electrode composition in which a sphericity (circularity) of the point-like conductive material is represented by Formula 1 below.

$$[\text{Formula } 1]$$

$$0.7 \leq X1/Y1 \leq 0.96$$

in Formula 1,

X1 refers to an area of orthographic projection of the point-like conductive material, and
Y1 refers to an area of a circle with the same circumference as the orthographic projection of the point-like conductive material.

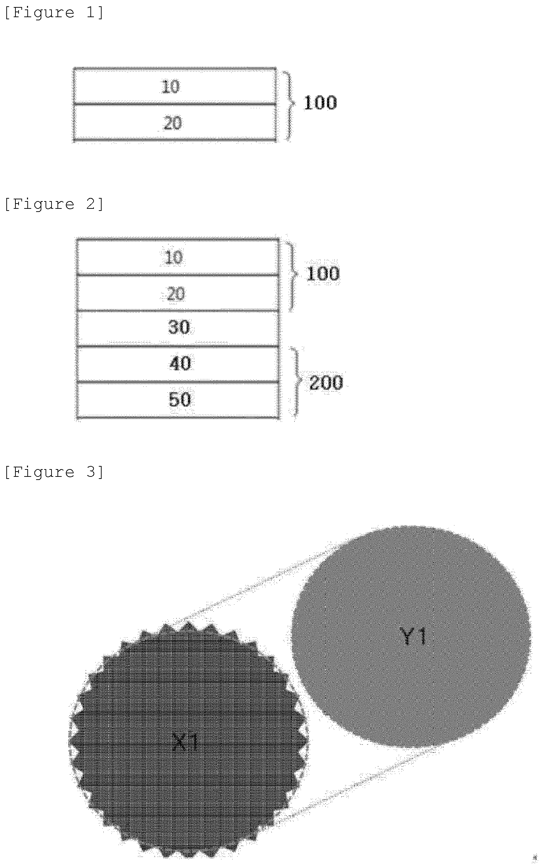

The measurement of Formula 1 above can be performed using a particle shape analyzer. Specifically, the point-like conductive material according to an exemplary embodiment of the present application may be scattered on a glass plate through air injection, and then a shape of 10,000 point-like conductive material particles in a photograph taken by orthographically projecting the scattered point-like conductive material particles may be measured. In this case, Formula 1 is a value expressing an average of 10,000 particles. Formula 1 according to the present application can be measured from the above image, and Formula 1 can be expressed as sphericity (circularity) of the silicon-based active material. FIG. 3 shows a concept of sphericity. The circularity may also be expressed by an equation [4n*area of orthographic projection of silicon-based active material/(circumference of orthographic projection of silicon-based active material)$^2$].

In another expression, X1 may refer to an actual area of the point-like conductive material, and Y1 may refer to an area of a spherical particle with the same circumference as the point-like conductive material.

In an exemplary embodiment of the present application, the circularity of the point-like conductive material may be, for example, 0.960 or less, for example, 0.957 or less. The circularity of the point-like conductive material may be 0.7 or greater, for example, 0.85 or greater, specifically 0.9 or greater, and more specifically 0.91 or greater, for example, 0.92 or greater.

As described above, the point-like conductive material satisfies the circularity of Formula 1 above, and differs from the planar or linear conductive material in the range defined by Formula 1.

In an exemplary embodiment of the present application, the point-like conductive material may have an intensity ratio (=ID/IG) of 0.01 or greater and 1.5 or less, as measured by Raman spectroscopy.

In another exemplary embodiment, the point-like conductive material may have the ID/IG of 0.01 or greater and 1.5 or less, 0.02 or greater and 1.3 or less, and more specifically, 0.03 or greater and 1.05 or less, as measured by Raman spectroscopy.

The ID/IG may mean an index for confirming defects in a structure, and the extent of defects present in the point-like conductive material can be confirmed by Raman spectroscopy measurement. By including a point-like conductive material that satisfies the aforementioned Raman spectroscopy range, a battery exhibits excellent life performance during operation in future.

In an exemplary embodiment of the present application, the point-like conductive material refers to a point-like or spherical conductive material that may be used for improving conductivity of the negative electrode and has conductivity without causing a chemical change. Specifically, the point-like conductive material may be one or more selected from the group consisting of carbon black, acetylene black, Ketjen black, channel black, furnace black, lamp black, thermal black, fluorocarbon, aluminum powder, nickel powder, zinc oxide, potassium titanate, titanium oxide, and a polyphenylene derivative, and preferably may include carbon black in terms of high conductivity and excellent dispersibility.

In an exemplary embodiment of the present application, the point-like conductive material may have a BET specific surface area of 40 m$^2$/g or greater and 70 m$^2$/g or less, preferably 45 m$^2$/g or greater and 65 m$^2$/g or less, and more preferably 50 m$^2$/g or greater and 60 m$^2$/g or less.

In an exemplary embodiment of the present application, a content of the functional group (volatile matter) of the point-like conductive material may satisfy a range of 0.01% or more and 1% or less, preferably 0.01% or more and 0.3% or less, and more preferably 0.01% or more and 0.1% or less.

In particular, when the content of the functional group of the point-like conductive material satisfies the above range, a functional group is present on a surface of the point-like conductive material, so that the point-like conductive material can be smoothly dispersed in a solvent when water is used as the solvent. In particular, in the present invention, as the specific silicon-based active material is used, a functional group content of the point-like conductive material can be lowered, which exhibits an excellent effect in improving dispersibility.

In an exemplary embodiment of the present application, the point-like conductive material having the content of the functional group within the range described above is included together with the silicon-based active material, and the content of the functional group can be adjusted according to a degree of heat treatment of the point-like conductive material.

In an exemplary embodiment of the present application, the negative electrode conductive material may have a central particle diameter of 0.45 $\mu$m or greater and 9 $\mu$m or less, preferably 0.6 $\mu$m or greater and 3 $\mu$m or less, and more preferably 0.90 $\mu$m or greater and 1.8 $\mu$m or less.

In an exemplary embodiment of the present application, the point-like conductive material may have a central particle diameter of 0.45 $\mu$m or greater and 9 $\mu$m or less, preferably 0.6 $\mu$m or greater and 3 $\mu$m or less, and more preferably 0.90 $\mu$m or greater and 1.8 $\mu$m or less.

In an exemplary embodiment of the present application, the negative electrode conductive material having a central particle diameter of 1 $\mu$m or less may be included in an amount of 5 parts by weight or less based on 100 parts by weight of the negative electrode conductive material.

The present application has a feature of using the negative electrode conductive material having the aforementioned central particle diameter range, rather than a point-like conductive material of several tens of nanometers in size used when manufacturing a pure Si electrode in the related art.

The point-like conductive material is a conductive material having a spherical shape, unlike linear conductive materials and planar conductive materials, and can address the aforementioned problems. Using the point-like conductive material facilitates securing the ion migration path and achieves better effects than using the linear conductive material or planar conductive material.

That is, the negative electrode conductive material includes a point-like conductive material, and a central particle diameter of the negative electrode conductive material is within the above range relative to a central particle diameter of the silicon-based active material, resulting in improved electrode quality through enhanced dispersibility and increased life performance by securing a pore structure.

In an exemplary embodiment of the present application, the point-like conductive material may be included in an amount of 95 parts by weight or more, 96 parts by weight or more, or 98 parts by weight or more, and 100 parts by weight or less, based on 100 parts by weight of the negative electrode conductive material.

In an exemplary embodiment of the present application, the negative electrode conductive material may be composed of a point-like conductive material.

In an exemplary embodiment of the present application, there is provided the negative electrode composition in which a central particle diameter of the negative electrode conductive material is 30% or greater and 60% or less relative to a central particle diameter of the silicon-based active material.

In an exemplary embodiment of the present application, the negative electrode conductive material may further include one or more selected from the group consisting of a planar conductive material and a linear conductive material.

The planar conductive material improves conductivity by increasing surface contact between silicon-based particles in the negative electrode, and at the same time, can serve to suppress disconnection of the conductive path due to the volume expansion. The planar conductive material may be expressed as a plate-like conductive material or a bulk-type conductive material.

In an exemplary embodiment of the present application, the planar conductive material may include one or more selected from the group consisting of plate-like graphite, graphene, graphene oxide, and graphite flake, and preferably may be plate-like graphite.

In an exemplary embodiment of the present application, an average particle diameter (D50) of the planar conductive material may be 2 $\mu$m to 7 $\mu$m, specifically 3 $\mu$m to 6 $\mu$m, and more specifically 3.5 $\mu$m to 5 $\mu$m. When the above range is satisfied, the sufficient particle size results in easy dispersion without causing an excessive increase in viscosity of the negative electrode slurry. Therefore, the dispersion effect is excellent when dispersing using the same equipment and time.

In an exemplary embodiment of the present application, there is provided the negative electrode composition in which the planar conductive material has D10 of 0.5 $\mu$m or greater and 2.0 $\mu$m or less, D50 of 2.5 $\mu$m or greater and 3.5 $\mu$m or less, and D90 of 6.5 $\mu$m or greater and 15.0 $\mu$m or less.

In an exemplary embodiment of the present application, for the planar conductive material, a planar conductive material with a high specific surface area having a high BET specific surface area or a planar conductive material with a low specific surface area may be used.

In an exemplary embodiment of the present application, for the planar conductive material, a planar conductive material with a high specific surface area or a planar conductive material with a low specific surface area may be used without limitation. However, in particular, the planar conductive material according to the present application can be affected to some extent in the electrode performance by the dispersion effect, so that a planar conductive material with a low specific surface area that does not cause a problem in dispersion is used particularly preferably.

In an exemplary embodiment of the present application, the planar conductive material may have a BET specific surface area of 0.25 m$^2$/g or greater.

In another exemplary embodiment, the planar conductive material may have a BET specific surface area of 1 m$^2$/g or greater and 500 m$^2$/g or less, preferably 5 m$^2$/g or greater and 300 m$^2$/g or less, and more preferably 5 m$^2$/g or greater and 250 m$^2$/g or less.

For the planar conductive material of the present application, a planar conductive material with a high specific surface area or a planar conductive material with a low specific surface area may be used.

In another exemplary embodiment, the planar conductive material is a planar conductive material with a high specific surface area, and the BET specific surface area may satisfy a range of 50 m$^2$/g or greater and 500 m$^2$/g or less, preferably 80 m$^2$/g or greater and 300 m$^2$/g or less, and more preferably 100 m$^2$/g or greater and 300 m$^2$/g or less.

In another exemplary embodiment, the planar conductive material is a planar conductive material with a low specific surface area, and the BET specific surface area may satisfy a range of 1 $m^2/g$ or greater and 40 $m^2/g$ or less, preferably 5 $m^2/g$ or greater and 30 $m^2/g$ or less, and more preferably 5 $m^2/g$ or greater and 25 $m^2/g$ or less.

In addition, the linear conductive material may include carbon nanotubes. The carbon nanotubes may be bundle-type carbon nanotubes. The bundle-type carbon nanotubes may include a plurality of carbon nanotube units. Specifically, the term 'bundle type' herein refers to, unless otherwise specified, a bundle or rope-shaped secondary shape in which a plurality of carbon nanotube units are aligned side by side in such an orientation that longitudinal axes of the carbon nanotube units are substantially the same, or are entangled. The carbon nanotube unit has a graphite sheet having a cylindrical shape with a nano-sized diameter, and has an sp2 bonding structure. In this case, the characteristics of a conductive material or a semiconductive material may be exhibited depending on the rolled angle and structure of the graphite sheet. As compared with entangled-type carbon nanotubes, the bundle-type carbon nanotubes can be more uniformly dispersed during the manufacture of the negative electrode, and can form more smoothly a conductive network in the negative electrode to improve the conductivity of the negative electrode.

In an exemplary embodiment of the present application, there is provided the negative electrode composition in which the negative electrode conductive material is included in an amount of 1 part by weight or more and 20 parts by weight or less based on 100 parts by weight of the negative electrode composition.

In another exemplary embodiment, the negative electrode conductive material may be included in an amount of 1 part by weight or more and 20 parts by weight or less, preferably 3 parts by weight or more and 15 parts by weight or less, more preferably 5 parts by weight or more and 15 parts by weight or less, and most preferably 8 parts by weight or more and 13 parts by weight or less based on 100 parts by weight of the negative electrode composition.

The negative electrode conductive material according to the present application has a completely different configuration from that of a positive electrode conductive material that is applied to the positive electrode. That is, the negative electrode conductive material according to the present application serves to hold the contact between silicon-based active materials whose volume expansion of the electrode is very large due to charging and discharging, and the positive electrode conductive material serves to impart some conductivity while serving as a buffer when roll-pressed, and is completely different from the negative electrode conductive material of the present invention in terms of configuration and role.

In addition, the negative electrode conductive material according to the present application is applied to a silicon-based active material, and has a completely different configuration from that of a conductive material that is applied to a graphite-based active material. That is, since a conductive material that is used for an electrode having a graphite-based active material simply has smaller particles than the active material, the conductive material has characteristics of improving output characteristics and imparting some conductivity, and is completely different from the negative electrode conductive material that is applied together with the silicon-based active material as in the present invention, in terms of configuration and role.

In an exemplary embodiment of the present application, the planar conductive material that is used as the negative electrode conductive material described above has a different structure and role from those of the carbon-based active material that is generally used as the negative electrode active material. Specifically, the carbon-based active material that is used as the negative electrode active material may be artificial graphite or natural graphite, and refers to a material that is processed into a spherical or point-like shape and used so as to facilitate storage and release of lithium ions.

On the other hand, the planar conductive material that is used as the negative electrode conductive material is a material having a planar or plate-like shape, and may be expressed as plate-like graphite. That is, the planar conductive material is a material that is included in order to maintain a conductive path in the negative electrode active material layer, and refers to a material for securing a conductive path in a planar shape inside the negative electrode active material layer, rather than playing a role in storing and releasing lithium.

That is, in the present application, the use of plate-like graphite as a conductive material means that graphite is processed into a planar or plate-like shape and used as a material for securing a conductive path rather than playing a role in storing or releasing lithium. In this case, the negative electrode active material included together has high-capacity characteristics with respect to storing and releasing lithium, and serves to store and release all lithium ions transferred from the positive electrode.

On the other hand, in the present application, the use of a carbon-based active material as an active material means that the carbon-based active material is processed into a point-like or spherical shape and used as a material for storing or releasing lithium.

That is, in an exemplary embodiment of the present application, artificial graphite or natural graphite, which is a carbon-based active material, has a point-like shape, and a BET specific surface area thereof may satisfy a range of 0.1 $m^2/g$ or greater and 4.5 $m^2/g$ or less. In addition, plate-like graphite, which is a planar conductive material, has a planar shape, and a BET specific surface area thereof may be 5 $m^2/g$ or greater.

In an exemplary embodiment of the present application, the negative electrode binder may include at least one selected from the group consisting of polyvinylidenefluoride-hexafluoropropylene copolymer (PVDF-co-HFP), polyvinylidenefluoride, polyacrylonitrile, polymethylmethacrylate, polyvinyl alcohol, carboxymethylcellulose (CMC), starch, hydroxypropylcellulose, regenerated cellulose, polyvinylpyrrolidone, tetrafluoroethylene, polyethylene, polypropylene, polyacrylic acid, ethylene-propylene-diene monomer (EPDM), sulfonated EPDM, styrene butadiene rubber (SBR), fluoro rubber, poly acrylic acid, and the above-described materials in which a hydrogen is substituted with Li, Na, Ca, etc., and may also include various copolymers thereof.

In an exemplary embodiment of the present application, there is provided the negative electrode composition in which the negative electrode binder includes an aqueous binder, and the aqueous binder includes one or more selected from the group consisting of poly acrylic acid (PAA) and polyacrylamide (PAM).

The negative electrode binder according to an exemplary embodiment of the present application serves to hold the active material and the conductive material in order to prevent distortion and structural deformation of the negative electrode structure during volume expansion and relaxation of the silicon-based active material. When such roles are satisfied, all of the general binders can be applied. Specifically, an aqueous binder may be used, and more specifically, a PAM-based binder may be used.

In an exemplary embodiment of the present application, the negative electrode binder may be included in an amount of 30 parts by weight or less, preferably 25 parts by weight or less, and more preferably 20 parts by weight or less, and 5 parts by weight or more, and 10 parts by weight or more on the basis of 100 parts by weight of the negative electrode composition.

In an exemplary embodiment of the present application, there is provided a negative electrode for a lithium secondary battery including: a negative electrode current collector layer; and a negative electrode active material layer including the negative electrode composition according to the present application or a cured product thereof formed on one surface or both surfaces of the negative electrode current collector layer.

FIG. 1 is a view showing a stack structure of a negative electrode for a lithium secondary battery according to an exemplary embodiment of the present application. Specifically, a negative electrode 100 for a lithium secondary battery can be seen which includes a negative electrode active material layer 20 on one surface of a negative electrode current collector layer 10. FIG. 1 shows that the negative electrode active material layer is formed on one surface of the negative electrode current collector layer, but the negative electrode active material layer may be formed on both surfaces of the negative electrode current collector layer.

In an exemplary embodiment of the present application, the negative electrode for a lithium secondary battery may be formed by applying and drying a negative electrode slurry including the negative electrode composition to one surface or both surfaces of the negative electrode current collector layer.

In this case, the negative electrode slurry may include the negative electrode composition described above, and a slurry solvent.

In an exemplary embodiment of the present application, a solid content of the negative electrode slurry may satisfy a range of 5% or more and 40% or less.

In another exemplary embodiment, the solid content of the negative electrode slurry may satisfy a range of 5% or more and 40% or less, preferably 7% or more and 35% or less, and more preferably 10% or more and 30% or less.

The solid content of the negative electrode slurry may mean a content of the negative electrode composition included in the negative electrode slurry, and may mean a content of the negative electrode composition based on 100 parts by weight of the negative electrode slurry.

When the solid content of the negative electrode slurry satisfies the above range, the viscosity is appropriate during formation of the negative electrode active material layer, so that particle agglomeration of the negative electrode composition is minimized to efficiently form the negative electrode active material layer.

In an exemplary embodiment of the present application, the slurry solvent may be used without limitation as long as it can dissolve the negative electrode composition, and specifically, water or NMP may be used.

In an exemplary embodiment of the present application, the negative electrode current collector layer generally has a thickness of 1 μm to 100 μm. Such a negative electrode current collector layer is not particularly limited as long as it has high conductivity without causing a chemical change in the battery. For example, copper, stainless steel, aluminum, nickel, titanium, fired carbon, copper or stainless steel each surface-treated with carbon, nickel, titanium, silver, or the like, an aluminum-cadmium alloy, or the like may be used. In addition, the negative electrode current collector layer may have microscopic irregularities formed on a surface to enhance a bonding force of the negative electrode active material, and may be used in various forms such as a film, a sheet, a foil, a net, a porous body, a foamed body, or a non-woven fabric body.

In an exemplary embodiment of the present application, there is provided the negative electrode for a lithium secondary battery in which a thickness of the negative electrode current collector layer is 1 μm or greater and 100 μm or less and a thickness of the negative electrode active material layer is 5 μm or greater and 500 μm or less.

However, the thickness may be variously modified depending on a type and a use of negative electrode used, and is not limited thereto.

In an exemplary embodiment of the present application, a porosity of the negative electrode active material layer may satisfy a range of 10% or greater and 60% or less.

In another exemplary embodiment, the porosity of the negative electrode active material layer may satisfy a range of 10% or greater and 60% or less, preferably 20% or greater and 50% or less, and more preferably 30% or greater and 45% or less.

The porosity varies depending on compositions and contents of the silicon-based active material, the conductive material, and the binder included in the negative electrode active material layer, and in particular, satisfies the range described above when the silicon-based active material and the conductive material are included in the specific compositions and contents according to the present application, so that the electrode has electric conductivity and resistance within appropriate ranges.

An exemplary embodiment of the present application provides a lithium secondary battery including a positive electrode; the negative electrode for a lithium secondary battery according to the present application; a separator provided between the positive electrode and the negative electrode; and an electrolyte.

FIG. 2 is a view showing a stack structure of a lithium secondary battery according to an exemplary embodiment of the present application. Specifically, a negative electrode 100 for a lithium secondary battery including a negative electrode active material layer 20 on one surface of a negative electrode current collector layer 10 can be seen, a positive electrode 200 for a lithium secondary battery including a positive electrode active material layer 40 on one surface of a positive electrode current collector layer 50 can be seen, and the negative electrode 100 for a lithium secondary battery and the positive electrode 200 for a lithium secondary battery are formed in a stack structure with a separator 30 interposed therebetween.

The secondary battery according to an exemplary embodiment of the present specification may particularly include the negative electrode for a lithium secondary battery described above. Specifically, the secondary battery may include a negative electrode, a positive electrode, a separator interposed between the positive electrode and the negative electrode, and an electrolyte, and the negative electrode is the same as the negative electrode described above. Since the negative electrode has been described above, a detailed description thereof is omitted.

The positive electrode may include a positive electrode current collector and a positive electrode active material layer formed on the positive electrode current collector and including the positive electrode active material.

In the positive electrode, the positive electrode current collector is not particularly limited as long as it has conductivity without causing a chemical change in the battery. For example, stainless steel, aluminum, nickel, titanium, fired carbon, aluminum or stainless steel each surface-treated with carbon, nickel, titanium, silver, or the like, or the like may be used. In addition, the positive electrode current collector may typically have a thickness of 3 to 500 $\mu$m, and a surface of the current collector may be formed with microscopic irregularities to enhance adhesive force of the positive electrode active material. For example, the positive electrode current collector may be used in various forms such as a film, a sheet, a foil, a net, a porous body, a foamed body, and a non-woven fabric body.

The positive electrode active material may be a positive electrode active material that is typically used. Specifically, the positive electrode active material may be a layered compound such as a lithium cobalt oxide ($LiCoO_2$) and a lithium nickel oxide ($LiNiO_2$), or a compound substituted with one or more transition metals; a lithium iron oxide such as $LiFe_3O_4$; a lithium manganese oxide such as chemical formula $Li_{1+c1}Mn_{2-c1}O_4(0\leq c1\leq0.33)$, $LiMnO_3$, $LiMn_2O_3$ and $LiMnO_2$; a lithium copper oxide ($Li_2CuO_2$); a vanadium oxide such as $LiV_3O_8$, $V_2O_5$ and $Cu_2V_2O_7$; a Ni-site type lithium nickel oxide represented by chemical formula $LiNi_{1-c2}M_{c2}O_2$ (where M is at least one selected from the group consisting of Co, Mn, Al, Cu, Fe, Mg, B, and Ga, and satisfies $0.01\leq c2\leq0.3$); a lithium manganese composite oxide represented by chemical formula $LiMn_{2-c3}M_{c3}O_2$ (where M is at least one selected from the group consisting of Co, Ni, Fe, Cr, Zn and Ta, and satisfies $0.01\leq c3\leq0.1$) or $Li_2Mn_3MO_8$ (where M is at least one selected from the group consisting of Fe, Co, Ni, Cu and Zn); $LiMn_2O_4$ in which a part of Li of the chemical formula is substituted with an alkaline earth metal ion, or the like, but is not limited thereto. The positive electrode may be Li metal.

The positive electrode active material layer may include a positive electrode conductive material and a positive electrode binder, together with the positive electrode active material described above.

In this case, the positive electrode conductive material is used to impart conductivity to the electrode, and can be used without particular limitation as long as the positive electrode conductive material has electronic conductivity without causing a chemical change in a battery to be constituted. Specific examples may include graphite such as natural graphite and artificial graphite; a carbon-based material such as carbon black, acetylene black, Ketjen black, channel black, furnace black, lamp black, thermal black and carbon fiber; metal powders or metal fibers such as copper, nickel, aluminum and silver; a conductive whisker such as zinc oxide and potassium titanate; a conductive metal oxide such as titanium oxide; or a conductive polymer such as polyphenylene derivative, or the like, and any one thereof or a mixture of two or more thereof may be used.

In addition, the positive electrode binder serves to improve bonding between particles of the positive electrode active material and adhesive force between the positive electrode active material and the positive electrode current collector. Specific examples may include polyvinylidene fluoride (PVDF), vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, tetrafluoroethylene, polyethylene, polypropylene, ethylene-propylene-diene polymer (EPDM), sulfonated-EPDM, styrene butadiene rubber (SBR), fluoro rubber, or various copolymers thereof, and the like, and any one thereof or a mixture of two or more thereof may be used.

The separator serves to separate the negative electrode and the positive electrode and to provide a migration path of lithium ions, in which any separator may be used as the separator without particular limitation as long as it is typically used in a secondary battery, and particularly, a separator having high moisture-retention ability for an electrolyte as well as a low resistance to the migration of electrolyte ions may be preferably used. Specifically, a porous polymer film, for example, a porous polymer film manufactured from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used.

In addition, a usual porous non-woven fabric, for example, a non-woven fabric formed of high melting point glass fibers, polyethylene terephthalate fibers, or the like may be used. Furthermore, a coated separator including a ceramic component or polymer material may be used so as to secure heat resistance or mechanical strength, and a separator having a single layer or multilayer structure may be selectively used.

Examples of the electrolyte may include an organic liquid electrolyte, an inorganic liquid electrolyte, a solid polymer electrolyte, a gel-type polymer electrolyte, a solid inorganic electrolyte, or a molten-type inorganic electrolyte that may be used in the manufacturing of the lithium secondary battery, but are not limited thereto.

Specifically, the electrolyte may include a non-aqueous organic solvent and a metal salt.

As the non-aqueous organic solvent, for example, an aprotic organic solvent such as N-methyl-2-pyrrolidinone, propylene carbonate, ethylene carbonate, butylene carbonate, dimethyl carbonate, diethyl carbonate, gamma-butyrolactone, 1,2-dimetoxy ethane, tetrahydrofuran, 2-methyltetrahydrofuran, dimethyl sulfoxide, 1,3-dioxolane, formamide, dimethylformamide, dioxolane, acetonitrile, nitromethane, methyl formate, methyl acetate, phosphoric acid triester, trimethoxy methane, dioxolane derivative, sulfolane, methyl sulfolane, 1,3-dimethyl-2-imidazolidinone, propylene carbonate derivative, tetrahydrofuran derivative, ether, methyl propionate, or ethyl propionate may be used.

In particular, among the carbonate-based organic solvents, ethylene carbonate and propylene carbonate, which are cyclic carbonates, are high-viscosity organic solvents and can be preferably used because they have high permittivity to dissociate a lithium salt well. When the cyclic carbonate is mixed with a linear carbonate with low viscosity and low permittivity, such as dimethyl carbonate and diethyl carbonate, in a suitable ratio and used, an electrolyte having high electric conductivity may be prepared, and therefore, may be more preferably used.

A lithium salt may be used as the metal salt, and the lithium salt is a material that is readily soluble in the non-aqueous electrolyte, in which, for example, one or more species selected from the group consisting of $F^-$, $Cl^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$ may be used as an anion of the lithium salt.

One or more additives, for example, a haloalkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte for the purpose of improving life characteristics of the battery, suppressing a decrease in battery capacity, improving discharge capacity of the battery, and the like, in addition to the above-described electrolyte components.

An exemplary embodiment of the present invention provides a battery module including the secondary battery as a unit cell, and a battery pack including the same. Since the battery module and the battery pack include the secondary battery having high capacity, high-rate capability, and high cycle characteristics, the battery module and the battery pack may be used as a power source of a medium to large sized device selected from the group consisting of an electric vehicle, a hybrid electric vehicle, a plug-in hybrid electric vehicle, and a power storage system.

Hereinafter, preferred examples will be provided for better understanding of the present invention. It will be apparent to one skilled in the art that the examples are only provided to illustrate the present invention and various modifications and alterations are possible within the scope and technical spirit of the present invention. Such modifications and alterations naturally fall within the scope of claims included herein.

Mode for Invention

**<Preparation Examples>**

**<Preparation of Negative Electrode>**

A negative electrode slurry was prepared by adding Si as a silicon-based active material, carbon black C as a point-like conductive material, and polyacrylamide as a binder to distilled water as a solvent for formation of a negative electrode slurry in a weight ratio of 80:10:10 (solid concentration: 25 wt%).

As a specific mixing method, after dispersing the point-like conductive material, the binder, and water at 2500 rpm for 30 minutes with a homo mixer, the silicon-based active material was added to the dispersion, which was then dispersed at 2500 rpm for 30 minutes to fabricate a negative electrode slurry.

The negative electrode slurry was coated on both surfaces of a copper current collector (thickness: 8 $\mu$m) serving as a negative electrode current collector with a loading amount of 85 mg/25 cm$^2$, which was then roll-pressed and dried in a vacuum oven at 130°C for 10 hours to form a negative electrode active material layer (thickness: 33 $\mu$m), whereby a negative electrode was prepared (thickness of negative electrode: 41 $\mu$m, porosity of negative electrode: 40.0%).

In this case, the central particle diameter of the silicon-based active material and the central particle diameter of the point-like conductive material satisfied the ranges shown in Table 1 below.

[Table 1]

| | Central particle diameter of point-like conductive material | Circularity of point-like conductive material | Central particle diameter of silicon-based active material | Central particle diameter of point-like conductive material/central particle diameter of silicon-based active material x 100 (%) |
|---|---|---|---|---|
| Example 1 | 0.9 $\mu$m | 0.95 | 3 $\mu$m | 30% |
| Example 2 | 1.8 $\mu$m | 0.90 | 3 $\mu$m | 60% |
| Example 3 | 1.5 $\mu$m | 0.91 | 5 $\mu$m | 30% |
| Example 4 | 3 $\mu$m | 0.89 | 5 $\mu$m | 60% |
| Comparative | 0.09 $\mu$m | 0.93 | 3 $\mu$m | 3% |

| | | | | |
|---|---|---|---|---|
| Example 1 | | | | |
| Comparative Example 2 | 2.1 μm | 0.90 | 3 μm | 70% |
| Comparative Example 3 | 3 μm | 0.89 | 15 μm | 20% |
| Comparative Example 4 | 2 μm | 0.90 | 2 μm | 100% |
| Comparative Example 5 | 10 μm | 0.86 | 5 μm | 200% |

In Table 1, the change in the central particle diameter of the silicon-based active material and the central particle diameter of the point-like conductive material can be controlled within the above range through classification. Specifically, the central particle diameters of Table 1 were controlled by adjusting the grinding time, deposition time, and temperature before classification.

**<Comparative Example 6>**

A negative electrode was prepared in the same manner as in Example 1, except that, in Example 1, instead of carbon black C as the point-like conductive material, carbon black C and carbon nanotubes as a linear conductive material were used in a weight ratio of 7:3.

**<Comparative Example 7>**

A negative electrode was prepared in the same manner as in Example 1, except that, in Example 1, instead of carbon black C as the point-like conductive material, carbon black C and carbon nanotubes as a linear conductive material were used in a weight ratio of 5:5.

**<Comparative Example 8>**

A negative electrode was prepared in the same manner as in Example 1, except that, in Example 1, instead of carbon black C as the point-like conductive material, carbon black C and carbon nanotubes as a linear conductive material were used in a weight ratio of 3:7.

**<Comparative Example 9>**

A negative electrode was prepared in the same manner as in Example 1, except that, in Example 1, instead of carbon black C as the point-like conductive material, carbon nanotubes as a linear conductive material were used.

**<Preparation of Secondary Battery>**

A positive electrode slurry (solid concentration: 78 wt%) was prepared by adding $LiNi_{0.6}Co_{0.2}Mn_{0.2}O_2$ (average particle diameter (D50): 15 μm) as a positive electrode active material, carbon black (product name: Super C65, manufacturer: Timcal) as a conductive material, and polyvinylidene fluoride (PVdF) as a binder to N-methyl-2-pyrrolidone (NMP) as a solvent for formation of a positive electrode slurry at a weight ratio of 97:1.5:1.5.

The positive electrode slurry was coated on both surfaces of an aluminum current collector (thickness: 12 um) serving as a positive electrode current collector with a loading amount of 537 mg/25 cm$^2$, which was then roll-pressed and dried in a vacuum oven at 130°C for 10 hours to form a positive electrode active material layer (thickness: 65 um), resulting in preparation of a positive electrode (thickness of positive electrode: 77 $\mu$m, porosity: 26%).

A lithium secondary battery was manufactured by interposing a polyethylene separator between the positive electrode and the negative electrode of the Examples and the Comparative Examples and injecting an electrolyte.

The electrolyte was obtained by adding vinylene carbonate to an organic solvent, in which fluoroethylene carbonate (FEC) and diethyl carbonate (DMC) were mixed at a volume ratio of 10:90, in an amount of 3 wt% based on a total weight of the electrolyte and adding $LiPF_6$ as a lithium salt to a concentration of 1M.

**<Experimental Example>**

**Experimental Example 1: Results of Monocell Life Performance**

For the secondary batteries including the negative electrodes manufactured in the Examples and Comparative Examples, the life and capacity retention rate were evaluated using an electrochemical charging and discharging device. The in-situ cycle test was conducted on the secondary battery at 4.2-3.0 V 2 C/0.5 C, and during the test, 0.33 C/0.33 C charging/discharging (4.2-3.0 V) was performed every 50 cycles to measure the capacity retention rate, and results thereof are listed in Table 2.

life retention rate (%) = {(discharge capacity in the Nth cycle)/(discharge capacity in the first cycle)} $\times$ 100

[Table 2]

|  | Life retention rate (%) after 200 cycles |
|---|---|
| Example 1 | 88 |
| Example 2 | 89 |
| Example 3 | 88 |
| Example 4 | 87 |
| Comparative Example 1 | 78 |
| Comparative Example 2 | 80 |
| Comparative Example 3 | 62 |
| Comparative Example 4 | 63 |
| Comparative Example 5 | 75 |

**Experimental Example 2: Change in Monocell Resistance**

In the test in Experimental Example 1, the capacity retention rates were measured by charging/discharging (4.2-3.0V) the batteries at 0.33C/0.33C every 50 cycles, and then the resistance increase rates were compared and analyzed by discharging the batteries with a pulse of 2.5C at SOC50 to measure the resistance.

For the evaluation of the resistance increase rate measurement, data at 200 cycles was each calculated, and the results are shown in Table 3 below.

[Table 3]

|  | Resistance increase rate (%) after 200 cycles |
|---|---|
| Example 1 | 9 |
| Example 2 | 7 |
| Example 3 | 8 |
| Example 4 | 8 |
| Comparative Example 1 | 30 |
| Comparative Example 2 | 21 |

(continued)

|  | Resistance increase rate (%) after 200 cycles |
|---|---|
| Comparative Example 3 | 103 |
| Comparative Example 4 | 100 |
| Comparative Example 5 | 84 |

## Experimental Example 3: Change in Pore Resistance in Electrode

For the negative electrodes of Example 1 and Comparative Examples 6 to 8, a coin symmetry cell was fabricated using two negative electrode sheets to analyze the Li ion diffusion resistance while excluding the effect of charge transfer, and electrochemical impedance spectroscopy (EIS) measurements were conducted. The liquid diffusion resistance was compared and analyzed by fitting the frequency-dependent impedance data obtained through measurements. The measurement results of the Li ion diffusion resistance in the electrode are shown in Table 4 below.

[Table 4]

|  | Pore resistance ($R_{pore}$, $\Omega$) |
|---|---|
| Example 1 | 1.5 |
| Comparative Example 6 | 3 |
| Comparative Example 7 | 4 |
| Comparative Example 8 | 7 |
| Comparative Example 9 | 15 |

As can be seen in Tables 2 and 3 above, when examining the life retention rate and resistance increase rate of the Examples, it was confirmed that, while maintaining the central particle diameter of the silicon-based active material at a micro size, the inclusion of the point-like conductive material as the negative conductive material in order to address the problem of uniform dispersion and the problem of coating condition on the electrode, and optimizing the central particle diameter of the point-like conductive material relative to the central particle diameter of the silicon-based active material, led to superior capacity retention rates compared to those of the Comparative Examples.

Specifically, as can be seen in Comparative Examples 1, 2, and 5, it was confirmed that even when the central particle diameter of the silicon-based active material falls within the range defined in the present invention, if the central particle diameter of the point-like conductive material deviates from the range and thus the particle diameter relationship is not satisfied, the life retention rate and the resistance increase rate are inferior to those of the Examples. In addition, when examining the results of Comparative Examples 3 and 4, it was confirmed that even when the central particle diameter of the point-like conductive material is similar to those of the Examples, if the central particle diameter of the silicon-based active material deviates from the range and thus the particle diameter relationship is not satisfied, the life retention rate and the resistance increase rate are inferior to those of the Examples.

For reference, in Example 4 where the particle diameter relationship between the point-like conductive material and the silicon-based active material is satisfied but the particle diameter of the point-like conductive material is slightly increased, there is no decrease in life performance and resistance increase rate compared to the other Examples in terms of performance aspects. However, there is a possibility that it may be inferior to the other Examples in design aspects such as energy density and electrode thickness. However, this case also exhibits superior characteristics compared to Comparative Examples 1 to 5 in terms of life and resistance aspects.

In addition, in the related art, linear or planar conductive materials are mainly used for negative electrodes using silicon-based active materials. However, in the case of linear conductive materials, as the amount of conductive material increases, the tendency for the negative electrode pores to become blocked intensifies, leading to increased pore resistance and performance problems. In addition, although the planar conductive material itself can achieve surface contact, there arises a problem in that the ion migration path is damaged due to negative electrode rolling. That is, the role of the negative electrode conductive material is to create contact points among particles to enable conduction, but if it blocks the pore structure in the electrode and hinders the ion migration path in the electrolyte, the resistance increases.

To verify this, the change in pore resistance was measured in Experimental Example 3, and the results can be seen in Table 4. Specifically, when comparing Comparative Examples 6 to 9 where point-like conductive materials and linear conductive materials were used, it was confirmed that as the amount of linear conductive material increased, the tendency for the negative electrode pores to become blocked intensified, leading to increased pore resistance.

Additionally, when the negative electrode of Example 1 was used, it was confirmed that the pore resistance was maintained low by using a specific point-like conductive material without including a linear conductive material.

This can also be confirmed in FIG. 5. In contrast to FIG. 4, FIG. 5 shows a case where a linear and/or planar conductive material is used. In this case, it is difficult to secure pores in the electrode, and the pores in the electrode are blocked due to side reactions during charging and discharging, which hinders the lithium ion migration path, leading to increased resistance and a deterioration in cell performance. Therefore, the present application includes a point-like conductive material as in the aforementioned Examples, which, as confirmed in FIG. 4, facilitates securing the ion migration path and can exhibit superior effects compared to using linear or planar conductive materials.

**Claims**

1.  A negative electrode composition comprising:

    a silicon-based active material;
    a negative electrode conductive material; and
    a negative electrode binder,
    wherein the silicon-based active material comprises one or more selected from the group consisting of Si and $SiO_x$ ($0<x\leq2$), and includes 90 parts by weight or more of Si based on 100 parts by weight of the silicon-based active material,
    wherein the negative electrode conductive material comprises a point-like conductive material, and
    wherein a central particle diameter of the negative electrode conductive material is 30% or greater and 60% or less relative to a central particle diameter of the silicon-based active material.

2.  The negative electrode composition of claim 1,
    wherein the point-like conductive material is included in an amount of 95 parts by weight or more based on 100 parts by weight of the negative electrode conductive material.

3.  The negative electrode composition of claim 1,
    wherein the central particle diameter of the silicon-based active material is 1.5 $\mu$m or greater and 15 $\mu$m or less.

4.  The negative electrode composition of claim 1,
    wherein the central particle diameter of the negative electrode conductive material is 0.45 $\mu$m or greater and 9 $\mu$m or less.

5.  The negative electrode composition of claim 1,
    wherein the negative electrode conductive material having a central particle diameter of 1 $\mu$m or less is included in an amount of 5 parts by weight or less based on 100 parts by weight of the negative electrode conductive material.

6.  The negative electrode composition of claim 1,
    wherein a circularity of the point-like conductive material is represented by Formula 1:

$$[\text{Formula 1}]$$

$$0.7 \leq X1/Y1 \leq 0.96$$

    in Formula 1,

    X1 refers to an area of orthographic projection of the point-like conductive material, and
    Y1 refers to an area of a circle with the same circumference as the orthographic projection of the point-like conductive material.

7.  The negative electrode composition of claim 1,
    wherein the point-like conductive agent comprises one or more selected from the group consisting of carbon black, acetylene black, Ketjen black, channel black, furnace black, lamp black, thermal black, fluorocarbon, aluminum powder, nickel powder, zinc oxide, potassium titanate, titanium oxide, and a polyphenylene derivative.

8. The negative electrode composition of claim 1,
   wherein the negative electrode binder comprises an aqueous binder, and
   wherein the aqueous binder comprises one or more selected from the group consisting of poly acrylic acid (PAA) and polyacrylamide (PAM).

9. The negative electrode composition of claim 1,
   wherein the silicon-based active material is included in an amount of 40 parts by weight or more based on 100 parts by weight of the negative electrode composition.

10. The negative electrode composition of claim 1,
    wherein the negative electrode conductive material is included in an amount of 1 part by weight or more and 20 parts by weight or less based on 100 parts by weight of the negative electrode composition.

11. A negative electrode for a lithium secondary battery, comprising:

    a negative electrode current collector layer; and
    a negative electrode active material layer provided on one surface or both surfaces of the negative electrode current collector layer,
    wherein the negative electrode active material layer comprises the negative electrode composition of any one of claims 1 to 10 or a cured product thereof.

12. The negative electrode for a lithium secondary battery of claim 11, wherein a thickness of the negative electrode current collector layer is 1 $\mu$m or greater and 100 $\mu$m or less, and
    wherein a thickness of the negative electrode active material layer is 5 $\mu$m or greater and 500 $\mu$m or less.

13. A lithium secondary battery comprising:

    a positive electrode;
    the negative electrode for a lithium secondary battery of claim 11;
    a separator provided between the positive electrode and the negative electrode; and
    an electrolyte.

[Figure 1]

[Figure 2]

[Figure 3]

[Figure 4]

[Figure 5]

## INTERNATIONAL SEARCH REPORT

| International application No. |
|---|
| **PCT/KR2024/095957** |

| A. | CLASSIFICATION OF SUBJECT MATTER |
|---|---|

**H01M 4/38**(2006.01)i; **H01M 4/48**(2010.01)i; **H01M 4/62**(2006.01)i; **H01M 4/134**(2010.01)i; **H01M 10/052**(2010.01)i; **H01M 10/0525**(2010.01)i; **H01M 4/02**(2006.01)i

According to International Patent Classification (IPC) or to both national classification and IPC

| B. | FIELDS SEARCHED |
|---|---|

Minimum documentation searched (classification system followed by classification symbols)

H01M 4/38(2006.01); H01M 10/052(2010.01); H01M 10/42(2006.01); H01M 4/131(2010.01); H01M 4/133(2010.01); H01M 4/134(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬 이차 전지(lithium secondary battery), 음극(anode), 실리콘 (silicon), 점형 도전재(point-type conductive additive), 바인더(binder), 입경(particle diameter), 구형화도(sphericity)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | KR 10-2021-0058172 A (LG CHEM, LTD.) 24 May 2021 (2021-05-24)<br>See claim 1; paragraphs [0019]-[0021], [0023], [0030], [0032], [0065], [0077]-[0080], [0082], [0084], [0086], [0088], [0091] and [0092]; and comparative example 1. | 1-13 |
| A | KR 10-2023-0047933 A (LG ENERGY SOLUTION, LTD.) 10 April 2023 (2023-04-10)<br>See abstract; and claims 1-16. | 1-13 |
| A | KR 10-2022-0059125 A (SK ON CO., LTD.) 10 May 2022 (2022-05-10)<br>See abstract; and claims 1-12. | 1-13 |
| A | KR 10-2022-0068773 A (SAMSUNG SDI CO., LTD.) 26 May 2022 (2022-05-26)<br>See abstract; and claims 1-8. | 1-13 |
| A | KR 10-2023-0108750 A (SAMSUNG SDI CO., LTD.) 19 July 2023 (2023-07-19)<br>See abstract; and claims 1-15. | 1-13 |

| ☐ Further documents are listed in the continuation of Box C. | ☑ See patent family annex. |
|---|---|

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **21 November 2024** | **21 November 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

| International application No. |
| --- |
| **PCT/KR2024/095957** |

| Patent document cited in search report | | | Publication date (day/month/year) | Patent family member(s) | | | Publication date (day/month/year) |
| --- | --- | --- | --- | --- | --- | --- | --- |
| KR | 10-2021-0058172 | A | 24 May 2021 | None | | | |
| KR | 10-2023-0047933 | A | 10 April 2023 | CN | 117378063 | A | 09 January 2024 |
| | | | | EP | 4333127 | A1 | 06 March 2024 |
| | | | | JP | 2024-522152 | A | 11 June 2024 |
| | | | | US | 2024-0222632 | A1 | 04 July 2024 |
| | | | | WO | 2023-055216 | A1 | 06 April 2023 |
| KR | 10-2022-0059125 | A | 10 May 2022 | US | 2022-0328827 | A1 | 13 October 2022 |
| KR | 10-2022-0068773 | A | 26 May 2022 | CN | 114520315 | A | 20 May 2022 |
| | | | | EP | 4002518 | A1 | 25 May 2022 |
| | | | | JP | 2022-081460 | A | 31 May 2022 |
| | | | | JP | 7282145 | B2 | 26 May 2023 |
| | | | | US | 2022-0158168 | A1 | 19 May 2022 |
| | | | | US | 2023-0197927 | A1 | 22 June 2023 |
| KR | 10-2023-0108750 | A | 19 July 2023 | None | | | |

Form PCT/ISA/210 (patent family annex) (July 2022)

22

**EP 4 625 538 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230100220
- JP 2009080971 A